# EUROPÄISCHE PATENTSCHRIFT

(11) **EP 4 238 051 B1**
(45) Veröffentlichungstag und Bekanntmachung des Hinweises auf die Patenterteilung: **11.09.2024**
(21) Anmeldenummer: 21798978.9
(22) Anmeldetag: 21.10.2021
(51) Int. Cl.: G06T 7/11, G06T 7/12, G06T 7/162, G06T 5/77, G06T 11/00

(54) **VERFAHREN ZUR MASKIERUNG, COMPUTERPROGRAMM, SPEICHERMEDIUM UND ELEKTRONISCHE STEUEREINHEIT**
MASKING METHOD, COMPUTER PROGRAM, STORAGE MEDIUM AND ELECTRONIC CONTROL UNIT
PROCÉDÉ DE MASQUAGE, PROGRAMME INFORMATIQUE, SUPPORT DE STOCKAGE ET UNITÉ DE COMMANDE ÉLECTRONIQUE

(30) Priorität: 29.10.2020 DE 102020213597
(43) Veröffentlichungstag der Anmeldung: 06.09.2023
(73) Patentinhaber: Robert Bosch GmbH, 70442 Stuttgart (DE)
(72) Erfinder: SYED, Azaruddin, 71636 Ludwigsburg (DE); KARLINSKIY, Igor, 74360 Ilsfeld (DE); BUSSLER, Michael, 74379 Ingersheim (DE)
(86) Internationale Anmeldenummer: PCT/EP2021/079173
(87) Internationale Veröffentlichungsnummer: WO 2022/090046

(56) Entgegenhaltungen:
- WO-A1-2018/104700
- US-A1- 2016 344 973
- XU M ET AL: "AN ADAPTIVE LEVEL SET SEGMENTATION ON A TRIANGULATED MESH", IEEE TRANSACTIONS ON MEDICAL IMAGING, IEEE, USA, vol. 23, no. 2, February 2004 (2004-02-01), pages 191 - 201, XP001238186, ISSN: 0278-0062, DOI: 10.1109/TMI.2003.822823

## Beschreibung

### Stand der Technik

Die Erfindung betrifft ein Verfahren zur Maskierung eines statischen Abschnitts eines Fahrzeugs, insbesondere eines Off-road-Fahrzeugs, in einem Eingangsbild.

Das Maskieren von Abschnitten eines Bildes findet Verwendung in unterschiedlichen technischen Bereichen. Dabei sind Verfahren bekannt, die zur Maskierung auf Methoden der Graphentheorie und/oder Gitter zurückgreifen.

Die Veröffentlichung von Randolph E. Bank, Andrew H. Sherman und Alan Weiser "Refinement algorithms and data structures for regular local mesh refinement" in Scientific computing (Montreal, Que-bec, 1982, IMACS Transactions on Scientific Computation, I, IMACS, New Brunswick, NJ, 1983, pp. 3-17) beschreibt hierzu beispielsweise einen Algorithmus zur Verfeinerung eines Gitters, wobei das Gitter insbesondere ein triangulares Gitter bildet.

### Offenbarung der Erfindung

Es wird ein Verfahren zur Maskierung eines statischen Abschnitts eines Fahrzeugs, insbesondere eines Off-road-Fahrzeugs, in einem Eingangsbild mit den Merkmalen des Anspruchs 1 vorgeschlagen. Ferner wird ein Computerprogramm, ein maschinenlesbares Speichermedium und eine elektronische Steuereinheit vorgeschlagen. Bevorzugte und/oder vorteilhafte Ausführungsformen ergeben sich aus den Unteransprüchen, der nachfolgenden Beschreibung und den beigefügten Figuren.

Es wird ein Verfahren zur Maskierung eines Abschnittes in einem Eingangsbild vorgeschlagen. Als Maskieren wird insbesondere auch die Anpassung und Verfeinerung einer ursprünglichen Maske und/oder einer bestehenden Maske verstanden. Ferner werden Maske und Maskierung im Wesentlichen gleichbedeutend verwendet. Insbesondere ist das Verfahren zur Maskierung eines statischen Abschnittes ausgebildet, wobei der statische Abschnitt vorzugsweise ein Fahrzeugabschnitt, ein Abschnitt eines Fahrzeugs, insbesondere Off-road-Fahrzeugs, und/oder eines komplex geformten statischen Abschnittes ist. Beispielsweise soll durch das Verfahren in einem Bild, beispielsweise aufgenommen von einer Kamera insbesondere einer Fahrzeugkamera, der oder die Abschnitte maskiert werden, die statisch sind, beispielsweise, weil sie zu dem Fahrzeug, dem Off-road-Fahrzeug und/oder einem damit verbundenen Abschnitt gehören. Durch das Maskieren soll beispielsweise ein solcher Abschnitt ausgeblendet, überdeckt und/oder vereinfacht dargestellt sein und/oder werden. Als Off-road-Fahrzeug wird beispielsweise ein Flurförderzeug, insbesondere ein Gabelstapler, verstanden. Ferner kann als Off-road-Fahrzeug ein Baufahrzeug, beispielsweise ein Bagger, Kran, Transportfahrzeug oder Baumaschine verstanden werden. Im Unterschied zu einfachen Kraftfahrzeugen (PKWs) weisen Off-road-Fahrzeuge sehr komplexe Strukturen und/oder Geometrien auf, beispielsweise Zinken eines Gabelstaplers, Baggerschaufeln, Kranabschnitte und/oder anderweitige statische Abschnitte.

Das Eingangsbild umfasst und/oder zeigt mindestens einen statischen Abschnitt, vorzugsweise einen Abschnitt des Fahrzeugs, insbesondere Off-road-Fahrzeugs,, und eine Fahrzeugumgebung. Beispielsweise basiert und/oder ist das Eingangsbild als eine Aufnahme einer Fahrzeugkamera ausgebildet, wobei die Fahrzeugkamera die Fahrzeugumgebung und einen Abschnitt des Fahrzeugs, insbesondere Off-road-Fahrzeugs, oder Werkzeuges abbildet. Basierend auf dem Eingangsbild wird oder ist eine Ursprungsmaskierung ausgewählt und/oder festgelegt. Beispielsweise kann durch einen Benutzer oder eine Person die Ursprungsmaskierung in oder basierend auf dem Eingangsbild grafisch oder alphanumerisch ausgewählt und/oder festgelegt werden. Insbesondere kann die Ursprungsmaskierung beispielsweise ausgewählt und/oder festgelegt werden durch einen Objekterkennungsalgorithmus. Die Ursprungsmaskierung maskiert, legt fest und/oder beschreibt den statischen Abschnitt des Eingangsbildes, beispielsweise den statischen Abschnitt des Fahrzeugs, insbesondere Off-road-Fahrzeugs, der im Eingangsbild aufgenommen und/oder umfasst ist. Die Ursprungsmaskierung ist insbesondere eine zweidimensionale Fläche, wobei die Fläche zusammenhängend oder unzusammenhängend als Teilflächen ausgebildet sein kann. Die Ursprungsmaskierung weist insbesondere eine Kontur, beispielsweise eine Umrandung und/oder Randbereich auf, der die Ursprungsmaskierung zur Fahrzeugumgebung abgrenzt.

Das Eingangsbild wird durch ein Gitter, mit und/oder in ein Gitter partitioniert, aufgeteilt und/oder zerlegt. Das Gitter umfasst Knoten, Kanten und Zellen. Das Gitter ist vorzugsweise ein trianguliertes Gitter, wobei die Zellen Dreiecke bilden. Das Gitter kann ferner eine Metrik aufweisen, geordnet und/oder regelmäßig ausgebildet sein. Die Zellen sind für ein ursprünglich festgelegtes Gitter vorzugsweise regelmäßige Dreiecke und/oder regelmäßig angeordnet, wobei ursprünglich insbesondere verstanden wird, dass Zellen noch nicht durch das Verfahren weiter geteilt wurden. Die Zellen umfassen und/oder sind festgelegt durch Knoten und Kanten. Knoten sind beispielsweise als Punkte zu verstehen, wobei für dreieckige Zelle drei Knoten als Ecken vorhanden sind. Eine Kante ist beispielsweise als eine Linie zu verstehen, wobei eine dreieckige Zelle durch drei Kanten begrenzt wird. Die Kanten verbinden insbesondere die Knoten der Zellen, die die Eckpunkte bilden. Im Speziellen kann auf einer Kante zwischen zwei als Eckpunkte ausgebildete Knoten ein weiterer Knoten eingefügt sein und/oder werden, wobei ein solcher eingeführte Knoten beispielsweise als Zusatzknoten bezeichnet wird. Zwei benachbarte Zellen sind insbesondere über eine gemeinsame Kante verbunden. Für dreieckige Zellen weist ein Knoten, insbesondere Eckpunkt, eine Valenzzahl von sechs auf, wobei dies für einen Knoten bedeutet, dass dieser zu sechs Zellen gehört und/oder an sechs Zellen angrenzt. Insbesondere zur Durchführung des Verfahrens kann eine Knoten-zu-angrenzenden-Zellen-Tabelle und eine Knoten-zu-Kanten-Tabelle erstellt und/oder verwendet werden. Die Knoten-zu-angrenzenden-Zellen-Tabelle geht beispielsweise von der Valenzzahl sechs eines Knotens aus und speichert zu jedem Knoten bis zu sechs zugehörige und/oder angrenzende Zellen. Die Knoten-zu-Kanten-Tabelle speichert für Kante kannte die zwei zugehörigen und/oder angrenzenden Zellen und insbesondere eine Knotenkennung (Id), für den Fall, dass die Kante eine geteilte Kante bildet. Die Knoten-zu-Kanten-Tabelle kann beispielsweise über eine Funktion getindex() gewonnen werden, welche einen Index ohne Berücksichtigung der Ordnung bestimmt.

Das Verfahren sieht die Auswahl von Umgebungszellen vor. Als Umgebungszellen werden Zellen des Gitters ausgewählt, die eine Kante aufweisen, für die gilt, dass mindestens ein Knoten innerhalb der Ursprungsmaskierung liegt und ferner nicht alle Knoten der Kante. Derartige Kanten sind damit beispielsweise Kanten mit teilweisem Verlauf in der Ursprungsmaskierung. Insbesondere weisen derartige Zelle eine oder zwei Kanten auf, die die Kontur der Ursprungsmaskierung schneiden. Das Auswählen von Umgebungszellen aus den Zellen des Gitters erfolgt insbesondere aus allen Zellen des Gitters, zum Beispiel bei erstmaliger Anwendung des Verfahrens auf das Eingangsbild. Beispielsweise erfolgt eine Auswahl bei Iteration des Verfahrens und/oder Wiederholung des Verfahrens oder von Verfahrensschritten bei wiederholter Durchführung und/oder Anwendung nur aus solchen Zellen des Gitters, die vorher geteilt wurden und/oder nicht vom ursprünglichen Gitter vorgegeben waren.

Das Verfahren sieht vor, dass die ausgewählten Umgebungszellen geteilt werden.

Die Umgebungszellen werden dabei in jeweils vier Umgebungsteilzellen geteilt. Aus einer ausgewählten Umgebungszelle werden durch das Teilen vier Umgebungsteilzellen erhalten, wobei die vier Umgebungsteilzellen insbesondere die geteilte Umgebungszelle aus der sie hervorgehen ersetzen. Beispielsweise wird die Umgebungszelle, die geteilt wurde durch die vier Umgebungsteilzellen im Gitter ersetzt. Zur Teilung einer Umgebungszelle, insbesondere jeder der Umgebungszellen, wird auf jeder der Kanten der Umgebungszelle, insbesondere den drei Kanten, jeweils ein weiterer Knoten eingeführt. Der eingeführte Knoten dient zur Teilung der jeweiligen Kante. Eine Kante, die durch zwei Knoten begrenzt wurde umfasst dann beispielsweise drei Knoten, wobei ursprünglich eine Kante nun insbesondere als zwei neue Kanten mit einem gemeinsamen Knoten aufgefasst werden können. Zur Teilung der Umgebungszelle in die vier Umgebungsteilzellen werden drei Kanten eingeführt, wobei die drei eingeführten Kanten durch Verbinden der eingeführten Knoten definiert sind und/oder erhalten werden.

Durch das Teilen der ausgewählten Umgebungszellen, die einen Überlapp mit der Ursprungsmaskierung aufweisen, wird somit die Umgebung der Ursprungsmaskierung in kleinere und feinere Zellen geteilt. Somit werden nicht alle Zellen des Gitters geteilt, was einen sehr großen Rechenaufwand und Speicheraufwand bedeuten würde, sondern nur die Zellen, die als kritisch anzusehen sind. Da die Kontur und Geometrie von Off-road-Fahrzeugen und/oder deren statischen Abschnitten, sehr komplex ist, ist auch deren Maskierung sehr komplex. Eine Maske für Off-road-Fahrzeuge auf Eingangsbilder anzuwenden und anzupassen bedarf genauerer Betrachtung und häufig der Teilung des Gittes in den problematischen Abschnitten. Durch eine Teilung von Zellen die spezifisch aus der Umgebung der Ursprungsmaskierung ausgewählt werden, ist ein besonders recheneffizienter und speicherschonender Algorithmus verfügbar, der in die Maskierung komplexer Geometrien, beispielsweise von Off-road-Fahrzeugen, in Bildern erlaubt. Insbesondere sind auf PKW ausgerichtete Maskierungsverfahren nicht anwendbar, da PKWs eine sehr einfache, häufig rechteckige, Form ohne Problemstellen wie Zinken, Kanten und/oder Arbeitsabschnitten aufweisen, die bei Anwendung auf Off-road-Fahrzeuge unzureichende Ergebnisse liefern.

Durch das Verfahren wird somit eine besonders effiziente Adaption eines Gitters ermöglicht, die komplexen Geometrien gerecht wird und keine unnötige Rechenkapazität fordert. Insbesondere können kritische Bereiche dadurch in hoher Auflösung verfeinert werden und unkritische ausgespart werden, sodass das Verfahren auch in Eingebetteten Systemen anwendbar ist. Ferner führt das Verfahren zu geringen Artefakten im Bereich eines Übergangs von Maskierung und Umgebung. Insbesondere kann durch das Verfahren beispielsweise eine weitere Klassifizierung und/oder Zuordnung von Zellen, hier den Umgebung Teilzellen, zu Maske und/oder Umgebung erfolgen, beispielsweise, dass geteilte Umgebungsteilzellen mit Überlapp zur Maskierung zur Maskierung gezählt werden und Umgebungsteilzellen ohne Überlapp zur ursprünglichen Fahrzeugumgebung gezählt werden.

Besonders bevorzugt ist es, dass für die ausgewählten Umgebungszellen die zu den Zellen gehörigen Knoten als Umgebungsknoten ausgewählt werden. Für eine ausgewählte Umgebungszelle werden somit insbesondere die drei begrenzenden Knoten (Ecken) als Umgebungsknoten ausgewählt. Im Speziellen kann es vorgesehen sein, dass für den Fall, dass eine Umgebungszelle einen eingeführten Knoten zwischen den begrenzenden Knoten (Ecken) aufweist, diese Knoten auch als Umgebungsknoten ausgewählt werden. Für die ausgewählten Umgebungsknoten werden Knotenumgebungszellen ausgewählt, wobei Knotenumgebungszellen die Zellen sind, die zu dem Umgebungsknoten gehören. Für eine Valenzzahl von sechs werden beispielsweise bis zu, insbesondere exakt sechs, Knotenumgebungszellen ausgewählt. Die Auswahl der Knotenumgebungszellen erfolgt beispielsweise basierend auf der Knoten-zu-angrenzenden-Fläche-Tabelle.

Die Knotenumgebungszellen werden jeweils in vier Knotenumgebungsteilzellen geteilt, wobei die Knotenumgebungsteilzellen insbesondere Umgebungsteilzellen bilden und/oder als solche gesetzt werden. Zur Teilung der Knotenumgebungszellen wird auf jeder der drei Kanten der Knotenumgebungszelle ein weiterer Knoten eingeführt, insbesondere gleichartig wie zur Teilung der Umgebungszellen in die Umgebungsteilzellen. Die eingeführten Knoten werden durch Einführung von Kanten verbunden, sodass die Knotenumgebungszellen in jeweils vier Knotenumgebungsteilzellen bzw. Umgebungsteilzellen zerfallen, wobei die vier Umgebungsteilzellen insbesondere die ursprüngliche Knotenumgebungszelle ersetzen. Dieser Ausgestaltung liegt die Überlegung zugrunde, dass neben der Teilung von Umgebungszellen in Umgebungsteilzellen, also der Anpassung des Übergangs von Ursprungsmaskierung zu Umgebung, auch das Gitter und/oder die Parkettierung in den daran angrenzenden Regionen anzupassen ist. Durch diese Ausgestaltung kann eine besonders effiziente, rechenleistungsschonende und speicherplatzfreundliche Anpassung des angrenzenden Bereiches durchgeführt werden.

Optional ist es vorgesehen, dass überprüft wird, ob die Umgebungsteilzellen, insbesondere die im Verfahren bzw. Iterationsschritt erhaltenen Umgebungsteilzellen, einen Überlapp und/oder schon eine nicht leere Schnittmenge mit der Ursprungsmaskierung aufweisen. Insbesondere werden Umgebungsteilzellen, die einen Überlapp mit der Ursprungsmaskierung und/oder eine nicht leere Schnittmenge mit der Ursprungsmaskierung aufweisen, als Ursprungsmaskierung gesetzt und/oder der Ursprungsmaskierung zugeordnet, sodass die neue Ursprungsmaskierung diese Umgebungsteilzelle anschließend umfasst. Es erfolgt somit insbesondere eine Anpassung und/oder Verfeinerung der Ursprungsmaskierung, wobei diese angepasste und/oder verfeinerte Ursprungsmaskierung insbesondere Grundlage für eine erneute Durchführung des Verfahrens oder eines Teils des Verfahrens bilden kann, insbesondere für eine erneute Auswahl an Umgebungszellen und deren Teilung. Umgebungsteilzellen die keinen Überlapp und/oder eine leere Schnittmenge mit der Ursprungsmaskierung aufweisen, werden nicht zur Ursprungsmaskierung gezählt und/oder gesetzt, sondern insbesondere dem Gitter und/oder der Fahrzeugumgebung zugeordnet. Durch diese Ausgestaltung des Verfahrens wird die Ursprungsmaskierung angepasst und verfeinert. Beispielsweise können so Zellen, die vorher im Vergleich zu den ungeteilten Zellen groß waren, in geteilter Form zur genaueren Beschreibung der Maske und/oder Ursprungsmaskierung dienen. Der Begriff Ursprungsmaskierung wird, im Speziellen bei derartiger Ausgestaltung des Verfahrens, zur Vereinfachung der Beschreibung sowohl für die tatsächliche Ursprungsmaskierung als auch die neue Ursprungsmaskierung umfassend tatsächliche Ursprungsmaskierung plus hinzugefügte Umgebungsteilzellen verstanden.

Insbesondere ist es vorgesehen, zur weiteren Verfeinerung und besseren Maskierung durch die Ursprungsmaskierung, das Auswählen von Knotenumgebungszellen, von Umgebungszellen, das Teilen der Knotenumgebungszellen und der Umgebungszellen, das Setzen von Umgebungsteilzellen als Gitter und/oder als Ursprungsmaskierung wiederholt durchzuführen. Die Auswahl erfolgt beispielsweise nun auch aus Zellen, die Umgebungsteilzellen bilden. Beispielsweise wurden die Umgebungsteilzellen ohne Überlapp mit der Ursprungsmaskierung als Zellen des Gitters gesetzt. Das Wiederholen des Verfahrens und/oder der Verfahrensschritte kann beispielsweise durch eine festgelegte und/oder festlegbare Wiederholungsanzahl definiert sein. Alternativ und/oder ergänzend kann die Wiederholungsanzahl durch einen Vergleich und/oder Bestimmung einer Abweichung der Ursprungsmaskierung von einer Bekannten soll Geometrie, beispielsweise Fahrzeuggeometrie, bestimmt sein.

Besonders bevorzugt ist es, für mindestens eine Teilung oder alle Teilungen von Kanten, den Knoten so einzuführen, dass der Knoten die Kante hälftig teilt, beispielsweise, dass der eingeführte Knoten eine Punktsymmetrie für die ursprünglichen Knoten der zu teilenden Kante bildet. Alternativ kann das Teilen der Kante in anderen Verhältnissen erfolgen, beispielsweise zufällig oder benutzerdefiniert. Dieser Ausgestaltung liegt die Überlegung zugrunde, eine rechentechnisch und/oder programmtechnische einfache Ausgestaltung der Teilung der Zellen und/oder Kanten bereitzustellen, wobei beispielsweise die Symmetrie und/oder geometrische Eigenschaften des ursprünglichen Gitters nach dem Teilen im Wesentlichen erhalten bleiben.

Eine alternative Ausgestaltung der Erfindung sieht vor, dass für mindestens eine Teilung einer Kante durch das Einführen des weiteren Knotens, basierend auf einer Prüfung einer Überschneidung der zu teilenden Kante mit der Ursprungsmaskierung basiert. Beispielsweise wird für eine zu teilende Kante geprüft, ob diese einen Schnittpunkt mit der Kontur der Ursprungsmaskierung aufweist, wobei bei Vorliegen eines Schnittpunks der Schnittpunkt die Position des einzuführenden Knotens bildet. Dieser Ausgestaltung liegt die Überlegung zugrunde, dass das Einführen der weiteren Knoten zur Teilung der Umgebungszellen unter Berücksichtigung der Ursprungsmaskierung auf die komplexe Geometrie optimiert erfolgt, da durch eine solche Teilung der Umgebungszelle durch eine Umgebungsteilzelle im Wesentlichen die Überschneidung mit der Ursprungsmaskierung abgetrennt werden kann.

Eine Ausgestaltung der Erfindung sieht vor, dass Grenzumgebungszellen ausgewählt werden, insbesondere aus den Zellen des Gitters. Eine Grenzumgebungszelle ist eine Zelle des Gitters, die über mindestens eine gemeinsame Kante mit einer Umgebungszelle, im Speziellen der ausgewählten Umgebungszelle, verbunden und/oder benachbart ist. Mit anderen Worten teilen sich die Grenzumgebungszelle und die benachbarte Umgebungszelle die gemeinsame Kante. Die Grenzumgebungszellen werden in Grenzumgebungsteilzellen geteilt. Zur Teilung der Grenzumgebungszellen in Grenzumgebungsteilzellen wird eine Kante eingefügt und/oder eingeführt, wobei diese Kante einen Knoten, insbesondere Ecke, der Grenzumgebungszelle mit dem eingeführten Knoten der gemeinsamen Kante verbindet. Die gemeinsame Kante weist einen eingeführten Knoten auf, da es sich um eine Umgebungszelle handelt, die gemäß dem Verfahren geteilt wurde. In der Grenzumgebungszelle wird der eingeführte Knoten der gemeinsamen Kante mit einem Knoten bzw. Ecke, der Grenzumgebungszelle verbunden, sodass durch das Einführen dieser Kante die Grenzumgebungszelle geteilt wird, insbesondere zweigeteilt wird. Der eingeführte Knoten wird insbesondere mit dem Knoten der Grenzumgebungszelle verbunden, der der Kante mit dem eingeführten Knoten gegenüberliegt.

Insbesondere ist es vorgesehen, dass das Gitter so ausgebildet ist, dass zwei benachbarte dreieckige Zellen, sich zu einem Viereck mit vier Knoten ergänzen. Insbesondere teilen die sich zum Viereck ergänzenden Zellen sich eine Kante mit zwei Knoten, wobei die gemeinsame Kante eine Diagonale für das Viereck bildet. Beispielsweise ist es vorgesehen, dass Vierecke ausgewählt werden und/oder zu Vierecken gruppiert werden. Insbesondere werden die Vierecke und/oder dazugehörigen Zellen so ausgewählt und/oder gruppiert, dass diese in Eckbereichen der Ursprungsmaskierung angeordnet sind. Eckbereiche sind beispielsweise Bereiche der Ursprungsmaskierung und/oder deren Kontur mit spitzen Winkeln und/oder rechten Winkeln. Für die ausgewählten Vierecke und/oder den zugrundeliegenden Zellen, wird die Orientierung der ursprünglichen Diagonale, welche die gemeinsame bzw. geteilte Kante der zwei Zellen bildet, geändert, wobei die ursprüngliche Diagonale und/oder gemeinsame Kante entfernt wird, wobei die anderen beiden, ursprünglich nicht verbundenen Knoten bzw. Eckpunkte durch die neue Kante verbunden werden. Die so neu entstehenden Zellen weisen insbesondere eine neue, anders orientierte, gemeinsame Kante auf. Die so entstehenden neuen Zellen werden als Zellen des Gitters gesetzt und/oder als Umgebungszellen und/oder Umgebungsteilzellen gesetzt. Durch die Änderung der Orientierung der Diagonale bzw. die daraus resultierenden neuen Zellen des Gitters, können Eckbereiche, insbesondere spitze Winkel der Ursprungsmaskierung, besser verfeinert und angepasst werden. Beispielsweise ist so eine Einsparung von Iterationsschritten und/oder Teilungsschritten möglich.

Insbesondere ist es vorgesehen, dass Eckbereiche so bestimmt werden und/oder Vierecke in Eckbereichen so ausgewählt werden, dass diese als Eigenschaft aufweisen: Zellen, die jeweils zwei Knoten innerhalb der Ursprungsmarkierung aufweisen und gleichzeitig die zu den Knoten gehörenden Kanten in ihrer Orientierung nicht verändert wurden, beispielsweise der Orientierung des ursprünglichen Gitters entsprechen. Beispielsweise wird jede Zelle, die zwei Knoten innerhalb der Ursprungsmaskierung mit ursprünglicher Orientierung aufweist, mit der über diese Kante benachbarten Zelle, zu dem Viereck gruppiert.

Alternativ und/oder ergänzend ist es vorgesehen, dass als Zellen zur Gruppierung und/oder zur Auswahl von Vierecken die Zellen herangezogen werden, die exakt einen Knoten innerhalb der Ursprungsmaskierung aufweisen und die von diesem Knoten ausgehenden zwei Kanten zu zwei benachbarten Zellen aufweisen, die zur Orientierung des Gitters stehen.

Alternativ und/oder ergänzend werden als Zellen zur Gruppierung zu den vier Ecken bzw. als Eckbereiche die Zellen ausgewählt, für die die Eigenschaft gilt. Für eine Kante einer Zelle liegt genau ein Knoten innerhalb der Ursprungsmaskierung, wobei zu diesem Knoten exakt zwei weitere Knoten benachbarter Zellen ebenfalls in der Ursprungsmaskierung liegen, wobei die dadurch aufgespannte Ecke senkrecht zur ursprünglichen Orientierung des Gitters steht. Die von dieser Ecke eingeschlossenen Zellen werden insbesondere zu dem Viereck gruppiert.

Besonders bevorzugt ist es, dass das Eingangsbild eine Draufsicht auf das Fahrzeug, insbesondere Offroadfahrzeug, bildet und/oder darstellt. Beispielsweise basiert das Eingangsbild auf Kameraaufnahmen einer oder mehrerer Fahrzeugkameras, beispielsweise einer Frontkamera, eine Rückkamera, einer linken und einer rechten Seitenkamera. Das Eingangsbild ist beispielsweise basierend auf den Aufnahmen der Fahrzeugkameras und/oder einer Projektion der Aufnahmen gebildet. Das Fahrzeugs, insbesondere Offroadfahrzeug, ist in der Draufsicht (top view) durch die Ursprungsmaskierung ausgeblendet und/oder verdeckt, insbesondere durch ein Modell des Fahrzeugs, insbesondere Off-road-Fahrzeugs, in die Umgebung eingebettet.

Einen weiteren Gegenstand der Erfindung bildet ein Computerprogramm zur Ausführung auf einem Rechner, einem Prozessor und/oder einer elektronischen Steuereinheit. Das Computerprogramm ist ausgebildet und/oder eingerichtet bei Ausführung auf dem Rechner, dem Prozessor und/oder der elektronischen Steuereinheit das Verfahren und/oder einzelne Verfahrensschritte des Verfahrens wie vorher beschrieben durchzuführen und/oder anzuwenden.

Einen weiteren Gegenstand der Erfindung bildet ein maschinenlesbares Speichermedium, beispielsweise eine CD, DVD oder Festplattenspeicher. Auf dem maschinenlesbares Speichermedium ist das Computerprogramm gespeichert.

Einen weiteren Gegenstand der Erfindung bildet eine elektronische Steuereinheit, wobei der elektronischen Steuereinheit ein Eingangsbild wie vorher beschrieben bereitgestellt ist. Die elektronische Steuereinheit ist insbesondere ausgebildet und/oder eingerichtet, das vorher beschriebene Verfahren durchzuführen. Die elektronische Steuereinheit ist ausgebildet und/oder eingerichtet, eine Ursprungsmaskierung für das Eingangsbild festzulegen und/oder durch einen Benutzer festzulegen. Die elektronische Steuereinheit ist ausgebildet das Eingangsbild, insbesondere die Fahrzeugumgebung und/oder die Ursprungsmaskierung mittels eines Gitters aufzuteilen, wobei das Gitter insbesondere ein Dreiecksgitter bildet. Das Gitter ist ausgebildet wie vorher beschrieben. Die elektronische Steuereinheit ist ausgebildet, Umgebungszellen aus den Zellen auszuwählen, für die mindestens ein Knoten innerhalb der Ursprungsmaskierung liegt. Insbesondere werden von der elektronischen Steuereinheit die Zellen als Umgebungszellen ausgewählt, für die Kanten vorliegen mit der Eigenschaft: Ein Knoten der Kante liegt in der Ursprungsmaskierung, der andere Knoten liegt nicht in der Ursprungsmaskierung. Die elektronische Steuereinheit ist ausgebildet, die ausgewählten Umgebungszellen in Umgebungsteilzellen zu teilen, wobei die Steuereinheit ausgebildet ist, auf jede der Kanten der Umgebungszelle einen Knoten einzuführen, wobei die eingeführten Knoten durch neue Kanten verbunden werden.

Weitere Vorteile, Wirkungen und Ausgestaltungen der Erfindung ergeben sich aus den beigefügten Figuren und deren Beschreibung. Dabei zeigen:
Figur 1 beispielhafte Auswahl einer Ursprungsmaskierung;
Figur 2 mögliche Partitionierung eines Eingangsbildes;
Figur 3 Ausschnitt aus dem Gitter aus Figur 2;
Figur 4 Teilung einer Umgebungszelle;
Figur 5 beispielhafte Einführung einer zusätzlichen Kante in einer Grenzumgebungszelle;
Figur 6a, 6b eine Ursprungsmaskierung vor und nach Anwendung des Verfahrens;
Figur 7 Ausführungsbeispiel einer nicht hälftigen Teilung einer Kante;
Figur 8 Orientierungswechsel einer Diagonale eines Vierecks.

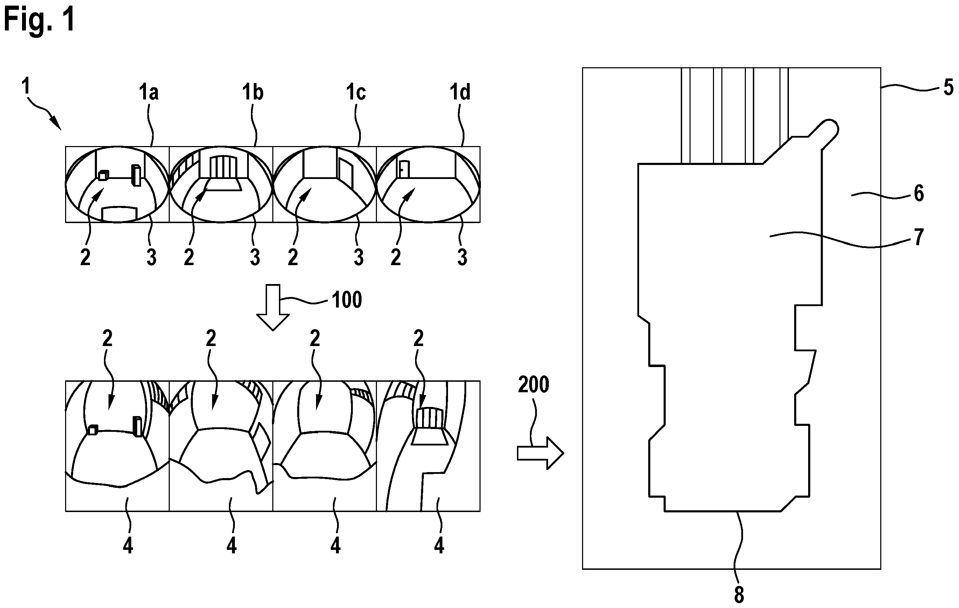

Figur 1 zeigt beispielhaft vier Kamerabilder 1 aufgenommen von Fahrzeugkameras eines Fahrzeugs, insbesondere Off-road-Fahrzeugs,, hier eines Gabelstaplers. Die Kamerabilder 1 umfassen ein Frontkamerabild 1a, ein Rückkamerabild 1b, ein linkes Seitenbild 1c und ein rechtes Bild 1d. Die Kamerabilder 1 sind hier als Bilder 1a, b, c, d einer Kamera mit einem Fischaugenobjektiv ausgebildet. Die Kamerabilder 1 zeigen eine Umgebung 2 des Fahrzeuges, die veränderbar und dynamisch ausgebildet ist. Ferner zeigen die Kamerabild 1 statische Abschnitte 3, wobei die statischen Abschnitte 3 durch Aufnahme eines Teils des Fahrzeuges gebildet sind. Die Kamerabilder 1 werden genutzt zur Erstellung eines Eingangsbildes 5, beispielsweise um eine Draufsicht auf die Umgebung 2 des Fahrzeuges zu erhalten. Beispielsweise soll in dem Eingangsbild 5 die Fahrzeugumgebung dargestellt werden, beispielsweise als Draufsicht, wobei die statischen Abschnitte 3 und/oder das Fahrzeug selbst Draufsicht vereinfacht dargestellt sein soll oder maskiert sein soll.

In einem Maskierungsschritt 100 wird von einem Benutzer in den Kamerabildern 1a, b, c, d durch graphische Auswahl im Bild, beispielsweise an einem Bildschirm und/oder Computer, eine Maskenauswahl 4 durchgeführt. Die Maskenauswahl 4 stellt eine Festlegung, Auswahl und/oder Begrenzung der statischen Abschnitte 3, innerhalb der Kamerabilder 1a, b, c, d dar, wobei diese beispielsweise zur Generierung der Ursprungsmaskierung im Eingangsbild 5 genutzt werden und/oder projiziert werden. In einem Projektionsschritt 200 wird das Eingangsbild 5 erzeugt, wobei basierend auf den Kamerabildern 1a, b, c, d und der Maskenauswahl 4 eine Draufsicht umfassend eine Fahrzeugumgebung 6 und eine Ursprungsmaskierung 7 erstellt wird. Die Fahrzeugumgebung 6 wird insbesondere durch die dynamischen Bereiche um das Fahrzeug gebildet, insbesondere die dynamischen Bereiche in den Kamerabildern 1. Die Ursprungsmaskierung des 7 basiert auf der Maskierungsauswahl 4, also den statischen Abschnitten in den Kamerabildern. Ferner kann die Ursprungsmaskierung 7 beispielsweise auf einer bekannten Geometrie des Fahrzeuges und/oder auf einen Objekterkennungsalgorithmus basieren und/oder ergänzt werden. Die Ursprungsmaskierung 7 stellt einen Flächenabschnitt dar, der im Wesentlichen dem Fahrzeug in eine Draufsicht entspricht. Die Ursprungsmaskierung 7 weist eine Kontur 8 auf, die die Fläche bzw. Ursprungsmaskierung 7 zur Fahrzeugumgebung 6 begrenzt. Das Eingangsbild 5 wird zur Ausführung eines Ausführungsbeispiels des Verfahrens im folgenden Partitionierung.

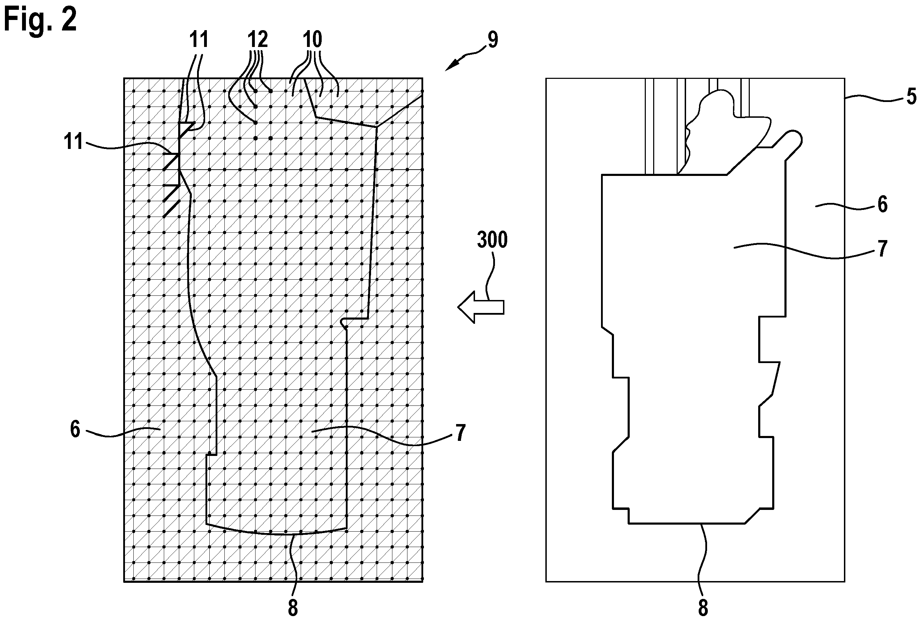

Figur 2 zeigt das Eingangsbild 5 aus Figur 1 mit der Fahrzeugumgebung 6, der Ursprungsmaskierung 7 und der Kontur 8. In einem Partitionierungsschritt 300 wird das Eingangsbild 5 durch ein Gitter 9 in Zellen 10 geteilt. Insbesondere kann es vorgesehen sein, dass im Partitionierungsschritt 300 Details des Eingangsbildes 5 vereinfacht und/oder aufgegeben werden, sodass beispielsweise im Gitter 9 nur unterschieden wird zwischen Ursprungsmaskierung 7, Kontur 8 und Fahrzeugumgebung 6, was beispielsweise zu einer geringeren Prozessorbelastung und führt.

Das Gitter 9 ist regelmäßig aufgebaut, im Speziellen regelmäßig bei Erstellung des Gitters 9. Bei Anwendung des Verfahrens, nach Anwendung des Verfahrens und/oder bei Iteration von Verfahrensschritten können Teile des Gitters 9 verändert werden und zur Unregelmäßigkeiten führen. Das Gitter 9 ist hier als ein ursprüngliches Gitter gezeigt. Die Zellen 10 sind dreieckige Zellen, sodass das Gitter 9 eine Triangulation darstellt. Die Zellen 10 weisen jeweils drei Kanten 11 auf, sowie drei Knoten 12. Die Kanten 11 einer Zelle 10 sind jeweils als die Verbindung von zwei der Knoten 12 ausgebildet. Jede Kante 11 ist Teil von zwei benachbarten Zellen 10. Insbesondere ist jede Zelle 10 durch die drei Kanten 11 zu drei benachbarten Zellen angeordnet. Jeder Knoten 12 im Gitter ist Teil und/oder benachbart zu sechs Zellen 10. Für die Zellen 10, die Kanten 11 sowie die Knoten 12 kann jeweils überprüft werden, ob diese im Bereich der Fahrzeugumgebung 6, der Umgebungsmaskierung 7 oder auf der Kontur 8 liegen.

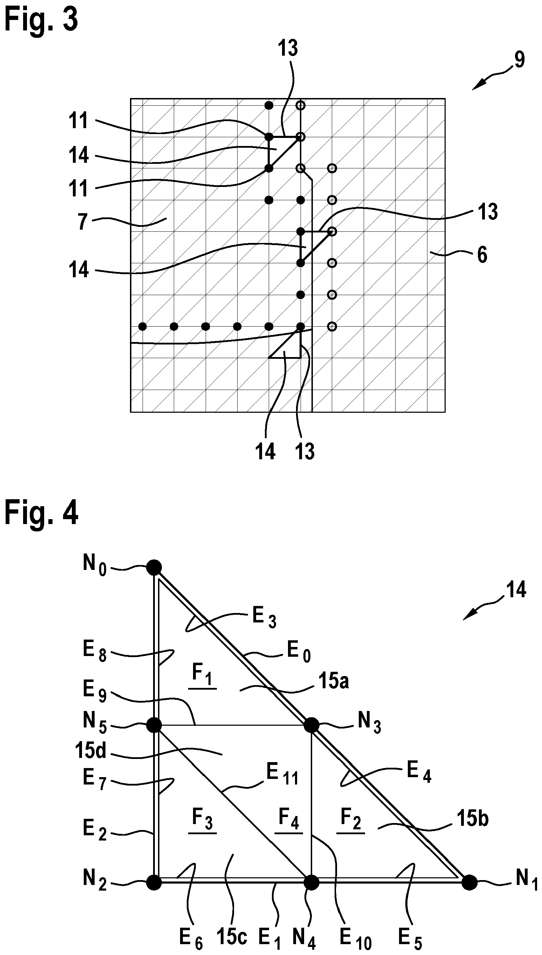

Figur 3 zeigt einen Ausschnitt aus dem partitionierten Eingangsbild 5. Der Ausschnitt zeigt das Gitter 9, die Ursprungsmarkierung 7 und die Fahrzeugumgebung 6 gezeigt. Beispielhaft sind einige ausgewählte Kanten 13 sowie ausgewählte Zellen 14 dargestellt. Die ausgewählten Zellen 14 bilden die Umgebungszellen. Die Umgebungszellen 14 werden dabei so ausgewählt, dass alle Zellen 10 des Gitters 9 auf das Vorliegen der Auswahleigenschaft überprüft werden, wobei bei wiederholter Durchführung des Verfahrens oder Iteration beispielsweise nur noch die Zellen 10 geprüft und/oder untersucht werden, die im vorhergehenden Verfahren oder Iterationsschritt geteilt wurden.

Die Auswahleigenschaft, dass eine Zelle 10 eine Umgebungszellen 14 bildet, ist, dass diese Zellen 10 eine Kante 13 aufweisen, für die ein Knoten 13 in der Ursprungsmaskierung 7 liegt jedoch nicht der andere Knoten in der Ursprungsmaskierung 7 liegt, sondern in der Fahrzeugumgebung 6. Dabei genügt es, dass die Zelle eine solche Kante mit dieser Eigenschaft aufweist, beispielhaft die Kanten 13, gleichgültig, ob die anderen Kanten 11 diese Eigenschaft ebenfalls aufweisen oder nicht. Alle Zellen 10 mit dieser Auswahleigenschaft werden als Umgebungszellen 14 ausgeht wählt. Die Umgebungszellen 14 werden anschließend in Umgebungsteilzellen geteilt, wie beispielsweise in Figur 4 dargestellt.

Figur 4 zeigt beispielhaft eine Umgebungszelle 14. Die Umgebungszelle 14 umfasst drei Knoten 12, hier die Knoten N₀, N₁, N₂. Ferner umfasst die Umgebungszelle 14 drei Kanten E₀, E₁ und E₂. Von den Kanten E0, E1 und E2 eingeschlossen ist die Fläche F₀. Die Umgebungszelle 14 mit der Fläche F₀ wird in vier Umgebungsteilzellen 15a,15b, 15c und 15d geteilt. Hierzu wird auf jeder der Kanten E₀, E₁ und E₂der Umgebungszelle 14 ein Knoten N₃, N₄, N₅ eingeführt. In diesem Ausführungsbeispiel teilen die eingeführten Knoten N₃, N₄ und N₅ die zugehörige Kanten E₀, E₁ und E₂ jeweils hälftig. Die ursprüngliche Kante E₀ zerfällt somit in die Kanten E₃ und E₄, die ursprüngliche kannte E₁ zerfällt in die Kanten E₅ und E₆, wobei die ursprüngliche kannte E₂ in die Kanten E₇ und E₈ zerfällt. Ferner werden die eingeführten Knoten N₃, N₄, N₅ jeweils durch Kanten E₉, E₁₀ und E₁₁ miteinander verbunden. Somit zerfällt die Umgebungszelle 14 in vier Umgebungsteilzellen 15a bis 15d mit den Flächen F₁, F₂, F₃ und F₄. Die ursprüngliche Umgebungszelle 14 wird anschließend durch die Umgebungsteilzellen 15a bis 15d ersetzt, sodass im Bereich der Umgebungszelle 14, wird das Gitter 9 verfeinert.

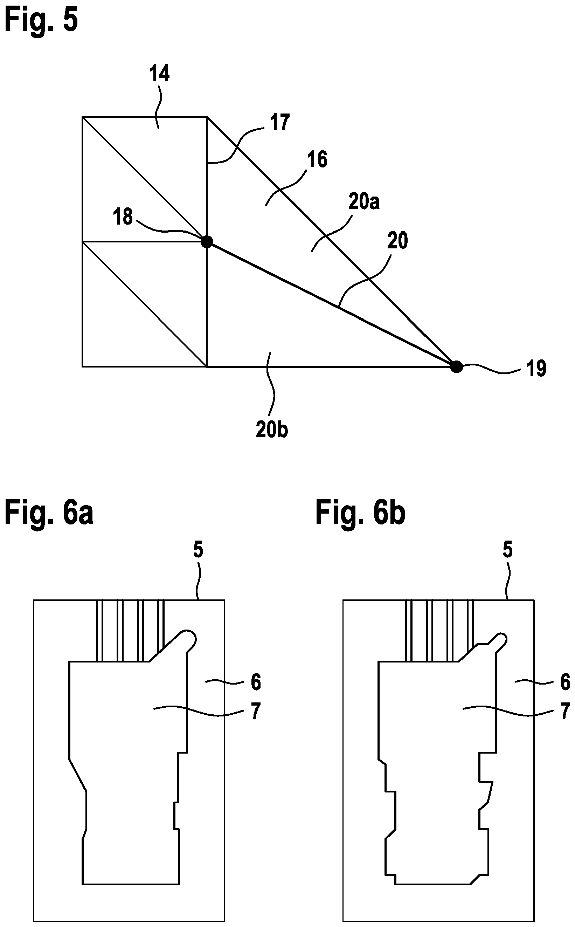

Figur 5 zeigt ein Ausführungsbeispiel zur Erteilung von Grenzumgebungszellen. Grenzumgebungszellen sind Zellen 10, die eine gemeinsame Kante 17 mit einer geteilten Umgebungszelle 14 aufweisen. Auf der gemeinsamen Kante 17 ist es somit der zusätzliche Knoten 18 eingeführt und neu vorhanden. Der zusätzliche Knoten 18 wird in der Grenzumgebungszelle 16 mit dem gegenüberliegenden Knoten 19 der Umgebungsteilzelle mittels der Kante 20 verbunden, sodass die Grenzumgebungszelle 16 in die Grenzumgebungsteilzellen 20a und 20b zerfällt.

Figur 6a und 6b zeigen beispielhaft Eingangsbilder 5 mit Fahrzeugumgebung 6 und Ursprungsmaskierung 7. Figur 6a zeigt das Eingangsbild 5 nach einmaliger Durchführung von Auswahl der Umgebungszellen und deren Teilung, wobei Teile der Umgebungsteilzellen der Ursprungsmaskierung 7 zugeordnet wurden. Figur 6b zeigt das Eingangsbild 5 aus Figur 6a nach der Durchführung von vier Auswahlschritten und deren Teilungen, wobei Teile der Grenzumgebung teilt Zellen 10 der Ursprungsmaskierung 7 zugeordnet wurden, sodass die Ursprungsmaskierung 7 verfeinert wurde. Die Ursprungsmaskierung 7 aus Figur 6b gibt die tatsächliche Form des Fahrzeugs in der Draufsicht besser wieder.

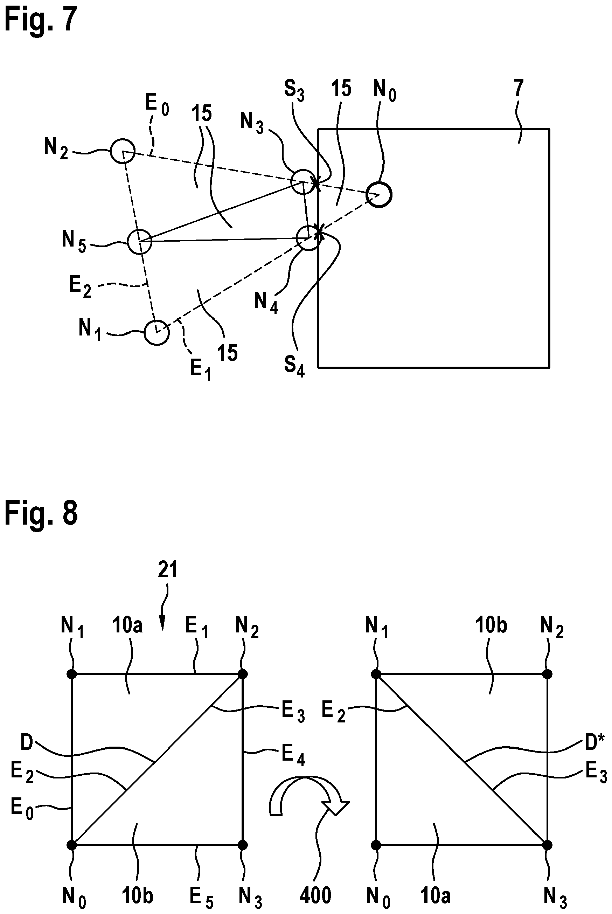

Figur 7 zeigt ein Ausführungsbeispiel zur Teilung einer Umgebungszelle 14 in die Umgebungsteilzellen 15 durch die Einführung von Knoten N₃, N₄ und N₅. Die eingeführten Knoten N₃, N₄ teilen die zugehörigen Kanten E₁ und E₀ hierbei jedoch nicht hälftig, sondern sind basierend auf der Ursprungsmaskierung 7 festgelegt. Hierbei wird ein Schnittpunkt S₃ und S₄ der Kanten E₀, E₁ mit der Ursprungsmaskierung 7 bestimmt. Am Ort des Schnittpunktes S₃ bzw. S₄ wird der Knoten N₃ bzw. in N₄ angeordnet. Falls eine Kante, hier beispielsweise E₂, keinen Schnitt mit der Ursprungsmaskierung 7 aufweist, wird die Kante hälftig geteilt, wie hier beispielsweise durch den Knoten N₅. Durch eine solche Festlegung der Knoten, insbesondere von N₃ und N₄, erfolgt eine verbesserte Verteilung der Umgebungszellen 14, da auf die Ursprungsmaskierung 7 Rücksicht genommen wird.

Figur 8 zeigt ein Beispiel zur Änderung der Orientierung einer Diagonale D eines Vierecks 21, wobei das Viereck 21 zwei dreieckige Zellen 10a und 1b umfasst. Die Zellen 10a ist durch die Knoten N₀, N₁, N₂ sowie die dazugehörigen Kanten E₀, E₁ und E₂ festgelegt. Die Zelle 10b ist durch die Knoten N₀, N₂ und N₃ sowie durch die Kanten E₃, E₄ und E₅ festgelegt. Die Kanten E₂ und E₃ sind Teil beider Zellen 10a und 10b und bilden eine Diagonale D für das Viereck 21. Um insbesondere in Eckbereichen und/oder Bereichen mit spitzen Winkeln das Gitter und die Maskierung besser anpassen zu können, wird in einem Orientierungswechselschritt 400 die Diagonale D in ihrer Orientierung geändert. Hierzu wird die ursprüngliche Diagonale D durch die Diagonale D* ersetzt, die statt der ursprünglichen gegenüberliegenden Knoten N₀ und N₂ die anderen, bisher nicht verbundenen Knoten, N₁ und N₃ miteinander verbindet, wobei die Diagonale D* die neuen Kanten E₂ und E₃ bildet. Die neue Zelle 10a und die neue Zelle 10b werden nun durch die andere Kombination der bestehenden Knoten N₀ bis N₃ festgelegt, so das auf die Konturen in problematischen Bereichen der Maskierung verstärkt eingegangen werden kann.

## Patentansprüche

1. Computerimplementiertes Verfahren zur Maskierung eines statischen Abschnitts (3) eines Fahrzeugs,
insbesondere eines Off-road-Fahrzeugs, in einem Eingangsbild (5), wobei das Eingangsbild (5) mindestens einen Abschnitt des Fahrzeugs, insbesondere des Off-road-Fahrzeugs, und eine Fahrzeugumgebung (6) umfasst, wobei basierend auf dem Eingangsbild (5) eine Ursprungsmaskierung (7) ausgewählt wird und/oder festgelegt ist, wobei die Ursprungsmaskierung (7) mindestens einen statischen Abschnitt (3) des Fahrzeugs, insbesondere des Off-road-Fahrzeugs, maskiert,
wobei das Verfahren **dadurch gekennzeichnet ist,**
**dass** das Eingangsbild (5) in ein Gitter (9) mit Knoten (12), Kanten (11) und Zellen (10) partitioniert wird, wobei eine Zelle (10) durch drei Kanten (11, E) begrenzt wird und eine Kante (11, E) mindestens einen ersten und einen zweiten Knoten (12, N) aufweist,
**dass** Umgebungszellen (14) ausgewählt werden als Zellen (10), die eine Kante (13) aufweisen, für die mindestens ein Knoten (12, N) in der Ursprungsmaskierung (7) liegt und ferner nicht alle Knoten (12, N) in der Ursprungsmaskierung (7) liegen,
**dass** jede Umgebungszelle (14) in jeweils vier Umgebungsteilzellen (15) geteilt wird, wobei zur Teilung auf jeder der drei Kanten (11, E) der Umgebungszelle (14) ein weiterer Knoten (N) eingeführt wird und die eingeführten Knoten (N) der Umgebungszelle (14) mittels eingeführten Kanten (E) verbunden werden.

2. Verfahren nach Anspruch 1, **dadurch gekennzeichnet, dass** die Knoten (12) der ausgewählten Umgebungszellen (14) als Umgebungsknoten ausgewählt werden, wobei als Knotenumgebungszellen die Zellen (10) ausgewählt werden, die an die Umgebungsknoten grenzen, wobei jede der Knotenumgebungszellen in jeweils vier Umgebungsteilzellen (15) geteilt wird, wobei zur Teilung auf jeder der drei Kanten (11, E) der Knotenumgebungszelle ein weiterer Knoten (N) eingeführt wird und die eingeführten Knoten (N) mit eingeführten Kanten (E) verbunden werden.

3. Verfahren nach einem der vorherigen Ansprüche, **dadurch gekennzeichnet, dass** Umgebungsteilzellen (15) die einen Überlapp mit der Ursprungsmaskierung (7) aufweisen, als Ursprungsmaskierung (7) gesetzt werden, wobei Umgebungsteilzellen (15) ohne Überlapp mit der Ursprungsmaskierung (7) als Gitter (9) gesetzt werden.

4. Verfahren nach Anspruch 3, **dadurch gekennzeichnet, dass** das Auswählen von Umgebungszellen (14), das Auswählen von Knotenumgebungszellen, das Teilen in Umgebungsteilzellen (15), das Setzen von Umgebungsteilzellen (15) als Gitter (9) und/oder das Setzen von Umgebungsteilzellen (15) als Ursprungsmaskierung (7) wiederholt wird.

5. Verfahren nach einem der vorherigen Ansprüche, **dadurch gekennzeichnet, dass** mindestens einer oder alle der eingeführten Knoten (N) die zugehörige Kante (11) hälftig teilt.

6. Verfahren nach einem der vorherigen Ansprüche, **dadurch gekennzeichnet, dass** für mindestens eine der Teilungen der Umgebungszellen (14), als der weitere Knoten (N), ein Schnittpunkt der zugehörigen Kante (E) mit einer Kontur der Ursprungsmaskierung (7) gewählt wird.

7. Verfahren nach einem der vorherigen Ansprüche, **dadurch gekennzeichnet, dass** Grenzumgebungszellen ausgewählt werden, wobei die Grenzumgebungszellen jeweils über eine gemeinsame Kante (17) mit einer der Umgebungszellen (14) verbunden sind, wobei die Grenzumgebungszellen in Grenzumgebungsteilzellen (20a, 20b) geteilt werden, wobei zur Teilung eine Kante (11) durch Verbindung eines Knotens (12) der Grenzumgebungszelle mit einem eingeführten Knoten (N) der gemeinsamen Kante (E) eingefügt wird.

8. Verfahren nach einem der vorherigen Ansprüche, **dadurch gekennzeichnet, dass** zwei benachbarte Zellen jeweils ein Viereck (21) mit vier Knoten (N) als Eckpunkte bilden, wobei eine gemeinsame Kante (17) der beiden Zellen (10a, 10b) eine Diagonale (D) des Vierecks (21) bildet und zwei der Eckpunkte verbindet, wobei Vierecke (21) in einem Eckbereich der Eckvierecke ausgewählt werden, wobei für die ausgewählten Eckvierecke die ursprüngliche Diagonale (D) des Vierecks (21) durch Verbindung der beiden anderen Eckpunkte in ihrer Orientierung zu einer neuen Diagonalen (D*) geändert wird.

9. Verfahren nach Anspruch 8, **dadurch gekennzeichnet, dass** Zellen (10), mit exakt zwei Knoten (N) in der Ursprungsmaskierung (7) und deren zugehörige Kante eine ursprüngliche Orientierung aufweist, als Zellen (10) zur Bildung der Vierecke (21) ausgewählt werden.

10. Verfahren nach Anspruch 9, **dadurch gekennzeichnet, dass** als Zellen (10) mit exakt einem Knoten (N) in der Ursprungsmaskierung (7) und zwei Kanten (E) von diesem Knoten (N) zu zwei Knoten (N) zweier benachbarte Zellen (10a, 10b) als Zellen zur Bildung der Vierecke (21) ausgewählt werden, wenn die Kanten (11) orthogonal zueinanderstehen.

11. Verfahren nach einem der vorherigen Ansprüche, **dadurch gekennzeichnet, dass** das Eingangsbild (5) eine Draufsicht auf das Fahrzeug, insbesondere das Off-road-Fahrzeug, und dessen Umgebung (2) bildet.

12. Computerprogramm, umfassend Befehle, die bei der Ausführung des Programms durch einen Rechner und/oder einen Prozessor und/oder eine elektronische Steuereinheit diesen bzw. diese veranlassen, das Verfahren nach einem der vorherigen Ansprüche durchzuführen und/oder anzuwenden.

13. Maschinenlesbares Speichermedium, wobei auf dem Speichermedium das Computerprogramm nach Anspruch 12 gespeichert ist.

14. Elektronische Steuereinheit, umfassend Mittel zur Durchführung des Verfahrens nach einem der Ansprüche 1 bis 11, wobei der elektronischen Steuereinheit ein Eingangsbild (5) mit einer Fahrzeugumgebung (6) bereitgestellt, wobei die elektronische Steuereinheit ausgebildet und/oder eingerichtet, eine Ursprungsmaskierung (7) für das Eingangsbild (5) festzulegen, wobei die elektronische Steuereinheit ausgebildet ist, das Eingangsbild (5) mittels eines Gitters (9) aufzuteilen, wobei die elektronische Steuereinheit ausgebildet ist, Umgebungszellen (14) aus den Zellen (10) auszuwählen und die ausgewählten Umgebungszellen (14) in Umgebungsteilzellen (15) zu teilen.

## Claims

1. Computer-implemented method for masking a static section (3) of a vehicle, in particular of an off-road vehicle, in an input image (5), wherein the input image (5) comprises at least one section of the vehicle, in particular of the off-road vehicle, and a vehicle environment (6), wherein an original mask (7) is selected and/or defined on the basis of the input image (5), wherein the original mask (7) masks at least one static section (3) of the vehicle, in particular of the off-road vehicle, wherein the method is **characterized in that** the input image (5) is partitioned into a grid (9) comprising nodes (12), edges (11) and cells (10), wherein a cell (10) is bounded by three edges (11, E) and an edge (11, E) has at least one first and one second node (12, N),
**in that** environment cells (14) having an edge (13), for which at least one node (12, N) is in the original mask (7) and furthermore not all nodes (12, N) are in the original mask (7), are selected as cells (10),
**in that** each environment cell (14) is divided into four environment subcells (15) in each case, wherein, for the division, a further node (N) is introduced on each of the three edges (11, E) of the environment cell (14) and the introduced nodes (N) of the environment cell (14) are connected by means of introduced edges (E).

2. Method according to Claim 1, **characterized in that** the nodes (12) of the selected environment cells (14) are selected as environment nodes, wherein the cells (10) which adjoin the environment nodes are selected as node environment cells, wherein each of the node environment cells is divided into four environment subcells (15) in each case, wherein, for the division, a further node (N) is introduced on each of the three edges (11, E) of the node environment cell and the introduced nodes (N) are connected to introduced edges (E).

3. Method according to one of the preceding claims, **characterized in that** environment subcells (15) that overlap the original mask (7) are set as the original mask (7), wherein environment subcells (15) which do not overlap the original mask (7) are set as a grid (9).

4. Method according to Claim 3, **characterized in that** the selection of environment cells (14), the selection of node environment cells, the division into environment subcells (15), the setting of environment subcells (15) as a grid (9) and/or the setting of environment subcells (15) as the original mask (7) are repeated.

5. Method according to one of the preceding claims, **characterized in that** at least one or all of the introduced nodes (N) divides the associated edge (11) in half.

6. Method according to one of the preceding claims, **characterized in that** a point of intersection between the associated edge (E) and a contour of the original mask (7) is selected as the further node (N) for at least one of the divisions of the environment cells (14).

7. Method according to one of the preceding claims, **characterized in that** boundary environment cells are selected, wherein the boundary environment cells are each connected to one of the environment cells (14) via a common edge (17), wherein the boundary environment cells are divided into boundary environment subcells (20a, 20b), wherein, for the division, an edge (11) is inserted by connecting a node (12) of the boundary environment cell to an introduced node (N) of the common edge (E).

8. Method according to one of the preceding claims, **characterized in that** two adjacent cells each form a square (21) with four nodes (N) as corner points, wherein a common edge (17) of the two cells (10a, 10b) forms a diagonal (D) of the square (21) and connects two of the corner points, wherein squares (21) in a corner region of the corner squares are selected, wherein the orientation of the original diagonal (D) of the square (21) is changed to form a new diagonal (D*) for the selected corner squares by connecting the two other corner points.

9. Method according to Claim 8, **characterized in that** cells (10) with exactly two nodes (N) in the original mask (7) and whose associated edge has an original orientation are selected as cells (10) for forming the squares (21).

10. Method according to Claim 9, **characterized in that** cells (10) with exactly one node (N) in the original mask (7) and two edges (E) from this node (N) to two nodes (N) of two adjacent cells (10a, 10b) are selected as cells for forming the squares (21) if the edges (11) are orthogonal to one another.

11. Method according to one of the preceding claims, **characterized in that** the input image (5) forms a plan view of the vehicle, in particular the off-road vehicle, and its environment (2).

12. Computer program comprising instructions which, when the program is executed by a computer and/or a processor and/or an electronic control unit, cause it/them to carry out and/or apply the method according to one of the preceding claims.

13. Machine-readable storage medium, wherein the computer program according to Claim 12 is stored on the storage medium.

14. Electronic control unit comprising means for carrying out the method according to one of Claims 1 to 11, wherein the electronic control unit is provided with an input image (5) containing a vehicle environment (6), wherein the electronic control unit is designed and/or configured to define an original mask (7) for the input image (5), wherein the electronic control unit is designed to divide the input image (5) by means of a grid (9), wherein the electronic control unit is designed to select environment cells (14) from the cells (10) and to divide the selected environment cells (14) into environment subcells (15).

## Revendications

1. Procédé mis en oeuvre par ordinateur pour masquer une partie statique (3) d'un véhicule, en particulier d'un véhicule tout-terrain, dans une image d'entrée (5), ladite image d'entrée (5) comprenant au moins une partie du véhicule, en particulier du véhicule tout-terrain, et un environnement de véhicule (6), sur la base de l'image d'entrée (5), un masquage d'origine (7) étant sélectionné et/ou déterminé, ce masquage d'origine (7) masquant au moins une partie statique (3) du véhicule, en particulier du véhicule tout-terrain, le procédé étant **caractérisé**
**en ce que** l'image d'entrée (5) est partitionnée en une grille (9) ayant des noeuds (12), des bords (11) et des cellules (10), une cellule (10) étant délimitée par trois bords (11, E) et un bord (11, E) comportant au moins un premier et un deuxième naeud (12, N),
**en ce que** des cellules environnantes (14) sont sélectionnées en tant que cellules (10) qui possèdent un bord (13) pour lequel au moins un noeud (12, N) est situé dans le masquage d'origine (7) et en ce qu'en outre, tous les noeuds (12, N) ne sont pas situés dans le masquage d'origine (7),
**en ce que** chaque cellule environnante (14) est respectivement divisée en quatre sous-cellules environnantes (15), pour une répartition sur chacun des trois bords (11, E) de la cellule environnante (14), un autre noeud (N) étant introduit et les noeuds introduits (N) de la cellule environnante (14) étant reliés au moyen de bords introduits (E).

2. Procédé selon la revendication 1, **caractérisé en ce que** les noeuds (12) des cellules environnantes sélectionnées (14) sont sélectionnés en tant que noeuds environnants, les cellules (10) adjacentes aux noeuds environnants étant sélectionnées en tant que cellules environnantes de noeuds, chacune des cellules environnantes de noeuds étant divisée en quatre sous-cellules environnantes respectives (15), un autre noeud (N) étant introduit sur chacun des trois bords (11, E) de la cellule environnante de noeuds pour la répartition, et les noeuds introduits (N) étant reliés par des bords introduits (E).

3. Procédé selon l'une des revendications précédentes, **caractérisé en ce que** des sous-cellules environnantes (15) qui présentent un chevauchement avec le masquage d'origine (7) sont définies en tant que masquage d'origine (7), des sous-cellules environnantes (15) sans chevauchement avec le masquage d'origine (7) étant définies en tant que grille (9).

4. Procédé selon la revendication 3, **caractérisé en ce que** la sélection de cellules environnantes (14), la sélection de cellules environnantes de noeuds, la division en sous-cellules environnantes (15), la définition de sous-cellules environnantes (15) en tant que grille (9) et/ou la définition de sous-cellules environnantes (15) en tant que masquage d'origine (7) sont répétées.

5. Procédé selon l'une des revendications précédentes, **caractérisé en ce qu'**au moins l'un ou la totalité des noeuds introduits (N) divisent en deux le bord associé (11).

6. Procédé selon l'une des revendications précédentes, **caractérisé en ce que** pour au moins l'une des répartitions des cellules environnantes (14), en tant qu'autre noeud (N), une intersection du bord associé (E) avec un contour du masquage d'origine (7) est sélectionnée.

7. Procédé selon l'une des revendications précédentes, **caractérisé en ce que** des cellules environnantes de frontière sont sélectionnées, les cellules environnantes de frontière étant respectivement reliées par un bord commun (17) à l'une des cellules environnantes (14), les cellules environnantes de frontière étant divisées en sous-cellules environnantes de frontière (20a, 20b), un bord (11) étant introduit pour la répartition en reliant un noeud (12) de la cellule environnante de frontière à un noeud introduit (N) du bord commun (E).

8. Procédé selon l'une des revendications précédentes, **caractérisé en ce que** deux cellules adjacentes forment respectivement un quadrilatère (21) ayant quatre noeuds (N) comme sommets, un bord commun (17) des deux cellules (10a, 10b) formant une diagonale (D) du quadrilatère (21) et reliant deux des sommets, des quadrilatères (21) étant sélectionnés dans une zone d'angle des quadrilatères d'angle, pour les quadrilatères d'angle sélectionnés, l'orientation de la diagonale initiale (D) du quadrilatère (21) étant modifiée en une nouvelle diagonale (D*) en reliant les deux autres points d'angle.

9. Procédé selon la revendication 8, **caractérisé en ce que** les cellules (10), qui ont exactement deux noeuds (N) dans le masquage d'origine (7) et dont le bord associé possède une orientation d'origine, sont sélectionnées en tant que cellules (10) destinées à former les quadrilatères (21).

10. Procédé selon la revendication 9, **caractérisé en ce que** les cellules (10) ayant exactement un noeud (N) dans le masquage d'origine (7) et deux bords (E) reliant ce noeud (N) à deux noeuds (N) de deux cellules adjacentes (10a, 10b) sont sélectionnées en tant que cellules destinées à former les quadrilatères (21) si les bords (11) sont orthogonaux entre eux.

11. Procédé selon l'une des revendications précédentes, **caractérisé en ce que** l'image d'entrée (5) forme une vue de dessus du véhicule, en particulier du véhicule tout-terrain, et de son environnement (2).

12. Programme informatique comprenant des instructions qui, lorsque le programme est exécuté par un ordinateur et/ou un processeur et/ou une unité de commande électronique, amènent ceux-ci à mettre en oeuvre et/ou à appliquer le procédé selon l'une des revendications précédentes.

13. Support de stockage lisible par machine sur lequel est stocké le programme informatique selon la revendication 12.

14. Unité de commande électronique comprenant des moyens permettant de mettre en oeuvre le procédé selon l'une des revendications 1 à 11, une image d'entrée (5) présentant un environnement de véhicule (6) étant fournie à l'unité de commande électronique, l'unité de commande électronique étant réalisée et/ou conçue de manière à établir un masquage d'origine (7) pour l'image d'entrée (5), l'unité de commande électronique étant conçue pour diviser l'image d'entrée (5) au moyen d'une grille (9), l'unité de commande électronique étant conçue pour sélectionner des cellules environnantes (14) parmi les cellules (10) et pour diviser les cellules environnantes sélectionnées (14) en sous-cellules environnantes (15).
